# FASCICULE DE BREVET EUROPEEN

(11) **EP 2 844 845 B1**
(45) Date de publication et mention de la délivrance du brevet: **31.10.2018**
(21) Numéro de dépôt: 13725410.8
(22) Date de dépôt: 02.05.2013
(51) Int. Cl.: F01D 25/16, F02C 7/36, F02C 7/06

(54) **PROCÉDÉ DE DÉMONTAGE D'UN TURBORÉACTEUR**
VERFAHREN ZUM ENTFERNEN EINES TURBOLÜFTERTRIEBWERKS
METHOD FOR REMOVING A TURBOFAN ENGINE

(30) Priorité: 02.05.2012 FR 1254031
(43) Date de publication de la demande: 11.03.2015
(73) Titulaire: Safran Aircraft Engines, 75015 Paris (FR)
(72) Inventeur: TAILPIED, Fabrice, F-77550 Moissy-Cramayel (FR); DAGRON, Hervé, F-77550 Moissy-Cramayel (FR); MUSTIERE, Cédric, F-77550 Moissy-Cramayel (FR)
(74) Mandataire: Gevers & Orès
(86) Numéro de dépôt international: PCT/FR2013/050979
(87) Numéro de publication internationale: WO 2013/164552

(56) Documents cités:
- EP-A1- 1 498 624
- EP-A1- 1 757 777
- EP-A1- 1 813 792
- US-A- 5 575 145

## Description

### DOMAINE TECHNIQUE DE L'INVENTION

La présente invention porte sur le démontage d'un moteur à turbine à gaz, notamment sur le démontage de l'écrou de liaison du rotor haute pression au palier avant dans un turboréacteur à double corps et à soufflante avant.

### ETAT DE LA TECHNIQUE

Un turboréacteur à double corps et à soufflante avant comprend deux rotors coaxiaux supportés par des paliers logés dans les moyeux de deux éléments de carter structuraux : désignés dans le domaine carter intermédiaire et carter d'échappement. A l'avant du moteur, les paliers sont montés dans le carter intermédiaire et à l'arrière un ou plusieurs paliers sont logés dans le carter d'échappement. Dans un moteur tel que le CFM56, les ensembles tournants sont ainsi montés sur cinq paliers : trois à l'avant et deux à l'arrière. A l'avant, l'arbre de soufflante et l'arbre du rotor basse pression, BP, sont montés respectivement dans les deux premiers paliers. Le rotor à haute pression, HP, est supporté par le palier N°3, en aval des deux premiers. A l'arrière, ce même rotor HP est supporté par un palier inter-arbre et l'arbre du rotor BP est supporté par un palier monté dans le moyeu du carter d'échappement.

Chaque moteur, après une période de fonctionnement, est envoyé à l'atelier pour une révision complète par exemple, où il est démonté entièrement et où chaque pièce est nettoyée, réparée ou bien remplacée le cas échéant. Le démontage comprend plusieurs étapes dont celle du module de turbine BP à l'arrière puis celle du module constitué par le corps HP. Le rotor du corps HP comprend un tourillon à l'amont qui est retenu dans le palier N°3 par un écrou de liaison qu'il faut dévisser. Cette opération présente en soi une certaine difficulté en raison de la faible accessibilité de cette pièce. L'écrou de liaison est une pièce cylindrique, filetée, dont la fonction est d'immobiliser l'extrémité amont du tourillon du rotor HP par rapport à la bague interne du palier. Cet écrou comprend quatre dents découpées dans la paroi cylindrique, et située dans le prolongement amont de la partie filetée.

La procédure standard passe par le démontage du module BP à l'arrière et l'extraction de l'arbre BP par l'arrière également. On accède à l'écrou de liaison par le passage central, libéré par l'arbre BP. Après mise en place d'un dispositif de calage se substituant au palier qui a été enlevé et d'un tube de guidage interne, un outil de forme appropriée, pourvu de deux ergots escamotables en extrémité d'un tube cylindrique est introduit dans ce passage jusqu'au niveau de l'écrou puis les deux ergots sont déployés radialement de manière à ce qu'ils viennent en prise contre deux des quatre dents de l'écrou de liaison. Le rotor HP étant immobilisé en rotation par une cale, la rotation de l'outil autour de son axe permet le dévissage de l'écrou.

Cette opération est délicate dans la mesure où il ne faut pas endommager les dents de l'écrou ni déformer ce dernier. Les directives du constructeur de la machine prescrivent l'application d'un couple maximum dans ce but.

Si l'écrou de liaison ne peut être dévissé par ce moyen, la procédure consiste alors à démonter l'ensemble de la soufflante avec le compresseur à basse pression, BP, pour avoir accès à l'écrou par l'avant du moteur. Une fois cet accès dégagé, un outil de forme appropriée est introduit le long de l'axe du moteur jusqu'à atteindre l'écrou de liaison. La tête de l'outil est adaptée à la forme de l'ensemble des dents de l'écrou ce qui permet d'appliquer un couple plus important que précédemment et augmenter les chances de parvenir à le desserrer.

Cependant, si l'écrou de liaison ne peut toujours être extrait par cette opération, il est alors nécessaire de le couper. On cherche à éviter la découpe de l'écrou qui est onéreuse, car non seulement il faut remplacer ce dernier mais les copeaux et la limaille produits risquent de venir polluer l'engrenage situé dans l'environnement immédiat ce qui impliquerait un démontage et un nettoyage de ces pièces. Cet engrenage, désigné IGB, a pour fonction d'entrainer le bras radial relié à la boîte d'engrenages, AGB, supportant les accessoires.
Avec l'augmentation de la durée ou du nombre de cycles de fonctionnement des moteurs, et l'utilisation de ceux-ci, le cas échéant, dans un environnement agressif, on constate que le démontage conduit maintenant plus souvent à la découpe de l'écrou de liaison en raison du grippage de l'écrou.
Le grippage de l'écrou de liaison est dû à plusieurs facteurs :
- Cokéfaction de la graisse résultant d'un échauffement de la pièce,
- Déformation de l'écrou au desserrage, due aux efforts de torsion générés par le dépassement de la limite du couple toléré,
- Oxydation des parties de l'écrou formant les pistes de centrage avec le tourillon et la bague interne du roulement du palier.
Le présent déposant s'est fixé comme objectif la mise au point d'un procédé de démontage d'un moteur, évitant autant que possible d'en venir à la découpe de l'écrou de liaison.

Le document EP1813792 A1 présente un procédé connu de démontage d'un turboréacteur.

### EXPOSE DE L INVENTION

L'invention porte sur un procédé de démontage d'un turboréacteur à double corps comportant une soufflante avant, un module HP avec un rotor HP et un module de turbine BP, le carter intermédiaire ayant un palier support du rotor HP. Le rotor HP est retenu dans le palier du carter intermédiaire par un écrou de liaison. Le procédé de démontage du moteur tel que défini par la revendication indépendante comporte une étape d'introduction d'un outil de dévissage de l'écrou de liaison après avoir dégagé l'accès à l'écrou de liaison, et est entre autres caractérisé par le fait qu'il comprend une étape de chauffage préalable de l'écrou de liaison avant la mise en action de l'outil de dévissage.

Un chauffage préalable à température modérée permet de ramollir les huiles cokéfiées collant ensemble le filetage de l'écrou de liaison à celui du tourillon et aussi de permettre une dilatation différentielle entre les éléments cylindriques en contact l'un avec l'autre par des portées ajustées serrées.
La température doit être maintenue en dessous d'une valeur de sécurité pour la tenue des pièces en présence. La température maximale de chauffage pour un exemple de mise en oeuvre du procédé est de 130°C.

Ensuite, après avoir déposé le module de turbine BP avec son arbre, on introduit par l'arrière un moyen de chauffage tubulaire dans l'espace central dégagé par le module de turbine BP, le long de l'axe du moteur, et on chauffe l'écrou de liaison par l'intérieur.
Conformément à une autre caractéristique, le moyen de chauffage comprend un tube avec un moyen pour insuffler de l'air chaud par une extrémité et des ouvertures radiales à l'autre extrémité pour guider l'air chaud radialement vers l'écrou de liaison.
Après avoir chauffé l'écrou, on introduit un outil de dévissage arrière. L'outil comporte de préférence un tube et une pluralité de doigts escamotables entre une position où ils sont logés dans le tube permettant l'introduction du tube jusqu'au niveau de l'écrou et une position où ils sont déployés radialement pour venir en contact avec les dents de l'écrou de liaison. On applique ensuite un couple de dévissage sur l'outil, le couple étant maintenu à une valeur inférieure à celle où les efforts sur les dents de l'écrou risqueraient de les endommager.

Selon une autre manière d'effectuer le démontage, après une tentative infructueuse par l'arrière, on procède au démontage de la soufflante de manière à dégager ledit écrou de liaison à l'avant et à la mise en place d'un outil de dévissage avant pour l'application d'un couple de dévissage de l'écrou. De préférence l'outil de dévissage avant comprend un élément tubulaire pourvu de dents de forme complémentaire à celle des dents de l'écrou de liaison ; on met en place l'élément tubulaire sur l'écrou et on applique un couple de dévissage.

On dispose avantageusement l'élément tubulaire dans un support rapporté sur le carter du moteur, le dit support formant un appui pour l'application du couple de dévissage.

Il est nécessaire également d'immobiliser le rotor du module HP. Dans ce but, le module de turbine BP étant démonté, on immobilise en rotation le rotor HP par un élément tubulaire engagé dans l'espace dégagé par le module BP et fixé par une extrémité au carter du module HP et à l'autre extrémité rendu solidaire en rotation du rotor HP.

Par mesure de sécurité, lorsqu'une résistance au dévissage est constatée, on vérifie au moyen d'une clé dynamométrique à cassure, calibrée au couple maximal toléré si l'écrou n'est pas grippé.

### BREVE DESCRIPTION DES FIGURES

On décrit maintenant plus en détail le procédé de démontage de l'écrou de liaison selon une mise en oeuvre donnée à titre d'exemple non limitatif, la description étant faite en référence au dessins joints en annexe et sur lesquels
La figure 1 est une représentation en coupe axiale d'un moteur auquel s'applique le procédé de l'invention ;
La figure 2 est une vue en demi coupe axiale montrant in situ l'écrou de liaison du rotor HP au palier avant dans le carter intermédiaire et qu'il faut démonter.
La figure 3 est une vue schématique de côté du moteur en cours de démontage ;

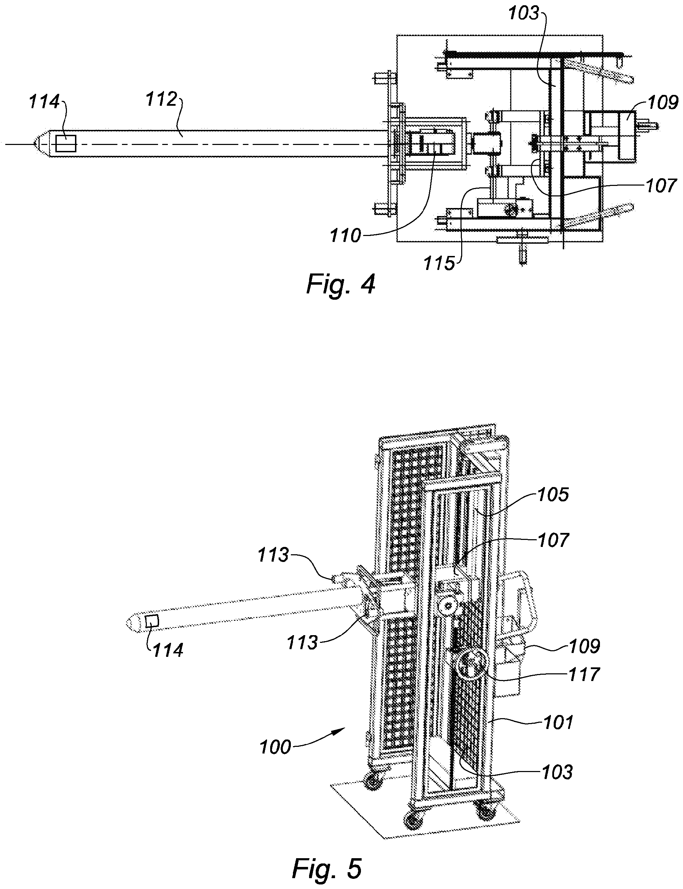

Les figures 4 et 5 représentent un exemple de réalisation du dispositif de chauffage de l'écrou de liaison ;
Les figures 6, 7 et 8 représentent un exemple de réalisation du dispositif de dévissage de l'écrou de liaison avec introduction par l'arrière côté turbine ; la figure 7 étant une coupe selon AA de la figure 6 montrant l'outillage en position déployée et la figure 8 montre l'outil en position rétractée.
Les figures 9 à 11 montrent l'outillage de dévissage par l'avant du moteur avec le support et la clé tubulaire ;
La figure 12 montre en vue isométrique l'outil de calage en rotation du rotor HP.

### DESCRIPTION DETAILLEE DE L INVENTION

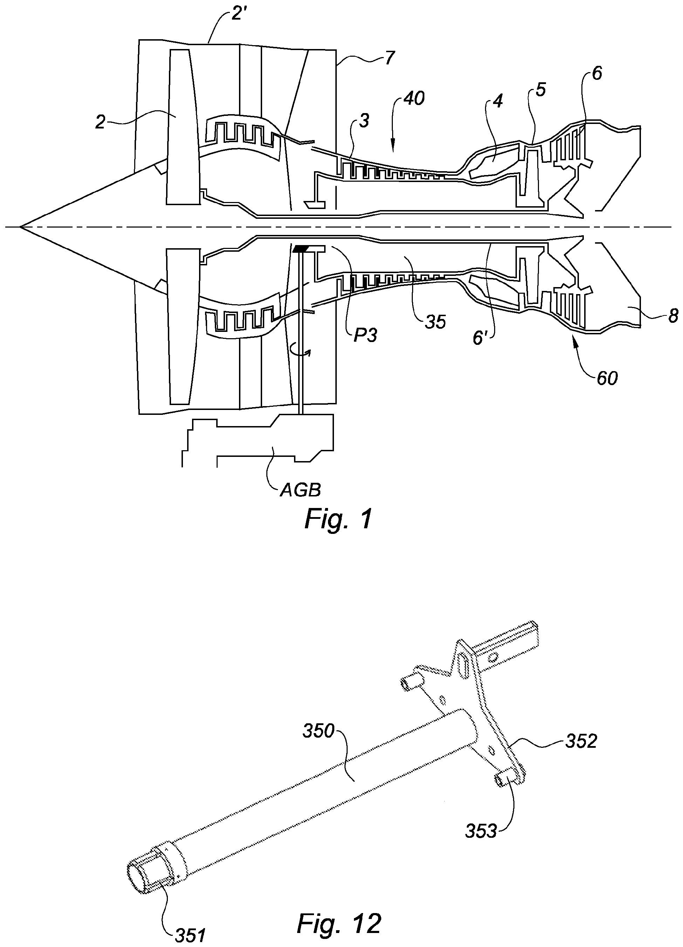

La coupe de la figure 1 représente un turboréacteur 1 à double corps et soufflante avant. De la droite vers la gauche de la figure, c'est-à-dire de l'amont vers l'aval dans le sens des flux gazeux, on distingue le rotor de la soufflante 2 à l'intérieur du carter de soufflante 2'. Le canal de soufflante délimité par le carter se divise en deux canaux annulaires concentriques, l'un pour le flux primaire traversant le moteur, l'autre pour le flux secondaire qui est éjecté sans avoir été réchauffé. Le flux primaire est comprimé dans le compresseur de gavage basse pression puis dans le compresseur HP 3. Il est admis dans la chambre de combustion 4 où il est chauffé par combustion d'un carburant. Les gaz chauds qui en sont issus sont distribués successivement dans la turbine HP 5 et la turbine BP 6 avant d'être éjectés. Les rotors sont supportés dans les deux carters structuraux que sont le carter intermédiaire 7 - auquel est fixé à l'amont le carter de soufflante - et le carter d'échappement 8 à l'arrière.

La soufflante 2 avec le compresseur de gavage et la turbine BP 6 sont reliés par un arbre de turbine BP 6'. L'arbre de turbine 6', la turbine 6 avec son carter forment avec le carter d'échappement 8, le module de turbine BP 60.

Le compresseur HP 3 et la turbine HP 5 forment le rotor HP 35 à l'intérieur du corps ou module HP 40. Celui-ci comprend également la chambre de combustion 4. Le rotor HP 35 est monté à l'amont dans le palier P3 qui est supporté dans le moyeu du carter intermédiaire 7. A ce niveau se trouve également la boite d'engrenages dite IGB pour l'entraînement de la boîte à engrenages des accessoires, dite AGB, par l'intermédiaire d'un arbre radial logé dans un bras du carter intermédiaire.

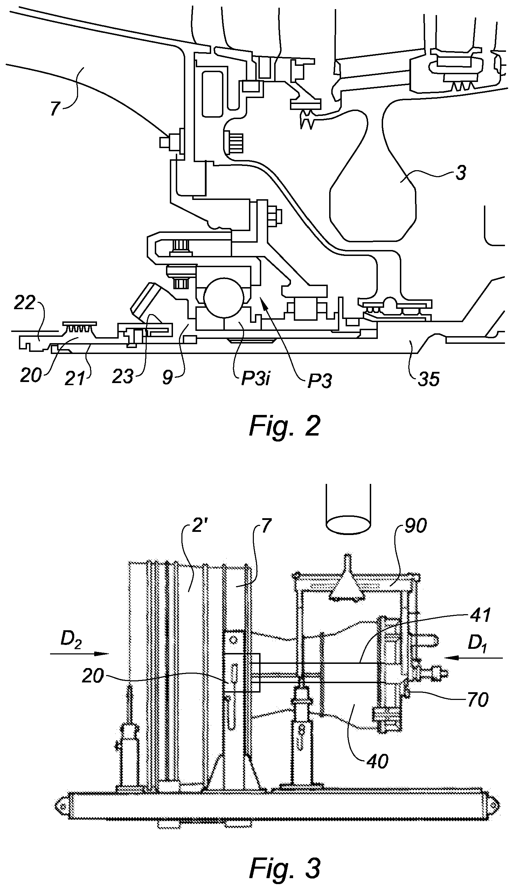

La figure 2 montre plus en détail cette partie du moteur ; le tourillon amont du rotor 35 est logé dans la bague intérieure P3i du roulement du palier P3 par l'intermédiaire du pignon 9 de l'engrenage IGB. L'écrou de liaison 20 est vissé en 21 à l'extrémité du rotor 35 et immobilise axialement ce dernier par rapport au carter intermédiaire. L'écrou de liaison 20 est ainsi une pièce cylindrique avec un filetage intérieur 21, une piste de centrage extérieure 23 et des dents 22 dans le prolongement axial vers l'amont de sa paroi cylindrique.

Le démontage du module HP 40 comprend la dépose préalable du module BP 60 pour libérer l'accès à l'écrou 20 et la mise en place d'un disque 70 de retenue du rotor HP dans son carter se substituant au palier inter arbre. Ce disque vient se substituer au palier inter-arbre aval qui a été enlevé avec le module BP 60. L'état du moteur est représenté schématiquement sur la figure 3. L'avant, carter de soufflante et carter intermédiaire, est fixé à un bâti et la partie arrière qui est à détacher du carter intermédiaire est le module HP 40. Il est accroché à une poutre 90 suspendue à un palan.

L'étape suivante consiste à introduire dans le tube de guidage 41 mis en place dans l'espace central libéré par l'arbre de la turbine BP, le moyen de chauffage 100 de l'écrou 20.

Il comprend un chariot 101 monté sur roulettes et avec une paroi verticale 103, pourvue de rails 105 verticaux guidant une plate forme 107 mobile verticalement. La plate forme est suspendue à un filin qui est relié par un jeu de poulies à un treuil 109 à commande manuelle permettant d'en régler la hauteur. La plateforme 107 supporte l'ensemble chauffant composé d'une chaufferette 110 et d'un tube creux 112. La chaufferette est disposée à l'extrémité proximale du tube pour produire un flux d'air chaud dans le tube 112 creux dirigé vers son autre extrémité. Celle-ci est ouverte latéralement avec des lumières 114 découpées dans la paroi du tube 112 autour de son axe. L'ensemble chauffant comprend aussi un moyen de repérage et de calage en position du tube lorsqu'il est introduit dans le moteur. Ce moyen est formé ici de deux saillies 113 sur une plaque transversale.

L'ensemble chauffant est monté sur la plateforme par l'intermédiaire d'un axe 115 de rotation horizontal de manière à ce qu'on puisse l'orienter dans une position verticale de rangement, où il est escamoté dans le chariot, ou bien dans une position active horizontale. La position angulaire de l'ensemble chauffant est commandée par un volant 116 disposé latéralement sur le chariot. Un mécanisme approprié transmet le mouvement de rotation du volant à la rotation de l'ensemble chauffant autour de l'axe horizontal 115.

Pour chauffer l'écrou de liaison 20 on place le chariot face au moteur, dans l'axe de celui-ci, l'élément de chauffage est mis à l'horizontale et introduit dans le tube de guidage 41 jusqu'à ce que les saillies 113 viennent en butée dans leur logement respectif ménagé dans le disque de retenue 70. L"extrémité du tube est alors à la hauteur de l'écrou On met la chaufferette en fonction et l'air chaud est insufflé au travers des lumières 114 du tube en direction de l'écrou de liaison. On contrôle la montée en température de l'écrou de liaison, elle ne doit pas dépasser 130°C. Lorsque la température est atteinte, la chaufferette est désactivée et le chariot retiré et remisé.

La seconde étape vise le dévissage de l'écrou avec introduction de l'outillage 200 depuis la turbine, à l'arrière, dans le tube de guidage 41. On utilise à cet effet un outillage de dévissage comportant un tube de dévissage à l'extrémité duquel sont montés quatre doigts amovibles entre une position rentrée à l'intérieur dudit tube permettant le déplacement du tube le long de l'espace tubulaire interne 41 et une position déployée où ils s'étendent radialement hors de la paroi cylindrique du tube de dévissage. Dans cette dernière position et en appliquant un couple de rotation autour de l'axe du tube, les quatre doigts sont en appui contre un bord latéral de chaque dent et leur transmettent les efforts de dévissage. En prévoyant un nombre de doigts égal à celui des dents de l'écrou de liaison, on assure une meilleure répartition des efforts qu'avec deux doigts seulement. Il s'ensuit la possibilité d'autoriser l'application d'un couple plus élevé augmentant les chances de parvenir à débloquer l'écrou.

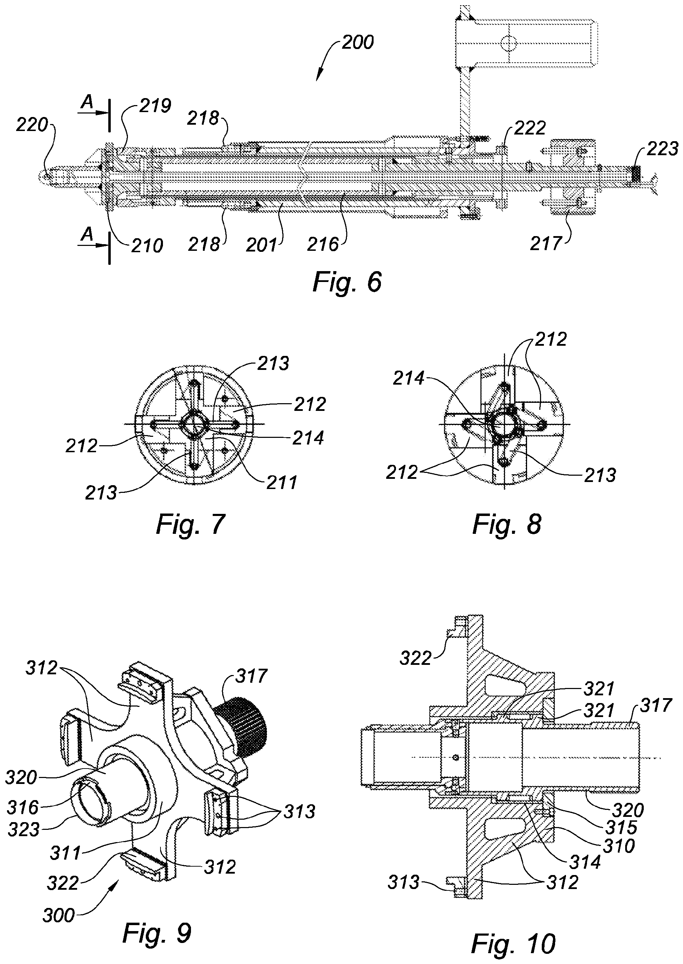

En se reportant aux figures 6 à 8, on voit une coupe d'un outillage convenant au procédé. Cet outillage 200 comprend un élément tubulaire 201 à l'intérieur duquel est logé le mécanisme assurant le déploiement suivi de la rétraction des doigts de contact avec les dents de l'écrou de liaison.

Le mécanisme d'actionnement des doigts comprend un disque 210 disposé en travers du tube à son extrémité, le disque présente quatre rainures 211 radiales en croix pour le logement individuel des doigts 212. Ceux-ci sont reliés à des biellettes 213 articulées à un organe d'actionnement 214, comme on le voit sur les figures 7 et 8 pour deux positions des doigts. En tournant l'organe d'actionnement sur lui-même autour de son axe, dans un sens ou dans l'autre, on fait prendre, par le jeu des biellettes, aux doigts une position rentrée ou sortie selon le sens. Le disque 210 est solidaire d'un élément tubulaire 216 entourant l'organe 214 d'actionnement des doigts. L'élément tubulaire 216 est solidaire d'une roue dentée 217 pour son entraînement en rotation. L'élément tubulaire 201 est agencé pour être rendu immobile par rapport au module HP 40. Il comprend dans ce but des saillies, ici non représentées et comme dans le moyen de chauffage de l'écrou de liaison, qui coopèrent avec le disque de retenue 70. A son autre extrémité le tube est pourvu de chevilles 218 qui sont destinées à être engagées dans des rainures du tourillon de rotor HP dans le but de contribuer à empêcher toute rotation du rotor HP 35 pendant que l'on applique le couple de desserrage sur l'écrou. Le tube 201 est associé enfin à des palettes 219 mobiles radialement actionnées par le volant 222, qui servent à extraire le frein de l'écrou 20 avant desserrage.

. Un organe de guidage 220 amont est aussi représenté sur cette figure. Son diamètre est plus petit que celui du tube 201 et assure le centrage de l'outillage 200 via un outillage prévu à cet effet et monté sur la soufflante 2

Après le chauffage de l'écrou de liaison, on introduit l'outillage dans l'espace central jusqu'à ce que les saillies latérales, non représentées viennent en butée contre le dispositif 110. Le disque est alors en vis-à-vis des dents de l'écrou. Les doigts sont ensuite déployés radialement par une rotation angulaire déterminée de l'organe de commande 223t. Un ou plusieurs doigts présentant un aileron latéral, on imprime une rotation au disque de manière que les ailerons se glissent dans les rainures correspondantes ménagées sous les dents.

Dans la position en butée, on sait qu'à l'extrémité amont du tube, non visible depuis l'arrière, les chevilles axiales sont engagées dans les rainures axiales correspondantes de l'intérieur du tourillon du rotor HP 35. Tout étant en position et calé, on met en place un multiplicateur de couple, tel que celui connu sous la dénomination Sweeney,

On vérifie si l'écrou de liaison n'est pas grippé au moyen d'une clé dynamométrique à cassure, calibrée sur le couple maximale autorisé. Si la clé ploie et se plie en deux, le couple maximal autorisé est dépassé ; on considère que l'écrou est bloqué, il faut tenter un dévissage par l'avant. Si la clé ne casse pas on met en place sur le multiplicateur de couple un moteur, à air comprimé par exemple, et on procède au desserrage puis au dévissage de l'écrou de liaison.

Le mode de démontage de l'écrou de liaison par l'avant comprend d'abord le démontage de l'ensemble formé par la soufflante, le compresseur de gavage et les paliers P1 et P2 de manière à avoir l'écrou en vue directe par l'avant.

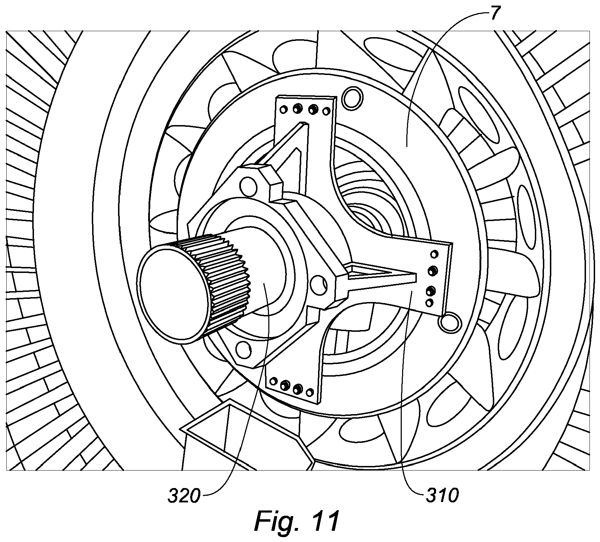

Comme dans le mode de démontage par la turbine et de la même façon, on procède au chauffage préalable de l'écrou de liaison à l'aide de l'outillage 100. Ensuite, on met en place l'outil de dévissage avant 300 sur le moteur, figures 9, 10 et 11. L'outil comprend deux pièces : un support de clé 310, fixé au carter du moteur, et une clé tubulaire 320, pouvant tourner autour de son axe dans le support. Le montage est représenté sur la figure 9. Le support 310 comprend quatre branches 312 s'étendant en étoile depuis un fut cylindrique 311. Le support comprend des patins amovibles 322. L'opérateur monte les patins appropriés au type moteur lui permettant d'obtenir les bonnes interfaces de fixation sur le carter. Les branches et les patins 322 sont percés à leur extrémité de trous 313 pour le passage des vis de fixation au carter intermédiaire. La clé tubulaire 320 est logée dans le fut cylindrique de manière à être bloquée axialement mais peut tourner librement autour de son axe. La clé comprend deux portées circulaires 321 qui viennent se placer dans la bague correspondante 314. Un anneau 315 amovible ferme à l'amont l'espace de la rainure pour bloquer axialement la clé dans le support. La clé comprend à une extrémité quatre dents 316 de forme complémentaire aux dents 22 de l'écrou de liaison 20 et à son autre extrémité un pignon 317 pour son entraînement en rotation. La clé comprend aussi une bague mince 323 qui sert à repousser le frein de l'écrou 20 avant desserrage.

Une fois l'outil 300 mis en place un tube de calage 350, figure 12, est disposé à l'intérieur du rotor HP pour le caler en rotation. Ce tube comprend une plaque transversale avec des saillies 353 de repérage qui viennent en butée dans des encoches correspondantes dans le disque 70. A l'extrémité du tube sont placées des chevilles 351 qui coopèrent avec des rainures axiales du rotor HP pour assurer l'immobilisation de ce dernier.

Le mode opératoire comprend les étapes suivantes :
Chauffage de l'écrou de liaison au moyen du dispositif de chauffage 100 jusqu'à une température ne dépassant pas 130°C.
Mise en place de l'outillage de desserrage par l'arrière 200,
Mise en place d'un multiplicateur d'effort sur le pignon, par exemple un appareil de type Sweeney.
Vérification que l'écrou de liaison peut être desserré par application d'un couple inférieur à la limite autorisée par le constructeur, au moyen d'une clé dynamométrique à cassure engagée dans le multiplicateur d'effort Sweeney.
Si la clé permet la rotation du pignon sans plier, alors l'écrou de liaison n'est pas grippé et on met en place un moteur pneumatique pour entraîner le pignon.
Si la clé dynamométrique indique que le couple maximum est dépassé, il faut envisager le desserrage par l'avant.
Le chauffage par l'avant comprend les étapes suivantes
Chauffage de l'écrou de liaison au moyen du dispositif de chauffage 100 jusqu'à une température ne dépassant pas 130°C.
Mise en place de l'outillage de desserrage par l'avant 300,
Montage du support 310 sur le carter intermédiaire et vissage des quatre branches aux orifices existant sur celui-ci.
Introduction de la clé de dévissage 320 dans le fut du support jusqu'à ce que l'extrémité dentée soit engagée entre les dents de l'écrou.
Verrouillage axial de la clé au moyen de l'anneau 315 sur le support.
Calage en rotation du rotor HP 35 par exemple au moyen d'un tube de calage 350 pourvu de chevilles de calage.
Mise en place d'un multiplicateur d'effort sur le pignon 317, par exemple un appareil de type Sweeney.
Vérification que l'écrou de liaison peut être desserré par application d'un couple inférieur à la limite autorisée par le constructeur, au moyen d'une clé dynamométrique à cassure engagée dans le multiplicateur d'effort Sweeney.
Si la clé permet la rotation du pignon sans plier, alors l'écrou de liaison n'est pas grippé et on met en place un moteur pneumatique pour entraîner le pignon.
Si la clé dynamométrique indique que le couple maximum est dépassé, il faut envisager la découpe de l'écrou.

Le procédé de l'invention est ainsi une amélioration par rapport à la technique antérieure car avec cette technique on a constaté que le nombre de découpes d'écrou après application de la procédure a été diminué de façon considérable et notable.

## Revendications

1. Procédé de démontage d'un turboréacteur à double corps comportant une soufflante avant (7), un module HP (40) avec un rotor HP (353), un module de turbine BP (60), le carter intermédiaire ayant un palier (P3) support du rotor HP, le rotor HP étant retenu dans ledit palier par un écrou de liaison (20), le procédé comportant une étape d'introduction d'un outil de dévissage de l'écrou de liaison après avoir dégagé l'accès à l'écrou de liaison, **caractérisé par le fait qu'**il comprend une étape de chauffage préalable de l'écrou de liaison avant la mise en action de l'outil de dévissage (200, 300), et **par le fait que** :
- après avoir déposé le module de turbine BP (60) avec son arbre, la soufflante n'étant pas démontée, on introduit par l'arrière un moyen de chauffage tubulaire (100) dans l'espace central dégagé par le module de turbine BP, le long de l'axe du moteur, et on chauffe l'écrou de liaison (20) par l'intérieur,
- après le chauffage de l'écrou de liaison, on introduit un outil de dévissage arrière (200), l'outil comportant un tube et une pluralité de doigts escamotables entre une position où ils sont logés dans le tube et une position où ils sont déployés radialement pour venir en contact avec les dents de l'écrou de liaison,
- on applique un couple de dévissage sur l'outil (200), le couple étant maintenu à une valeur inférieure à celle d'un couple maximal toléré où les efforts sur les dents risqueraient de les endommager,
- dans le cas d'une tentative infructueuse par l'arrière, on procède au démontage de la soufflante de manière à dégager l'écrou de liaison (20) à l'avant et on met en place un outil de dévissage avant (300) pour l'application d'un couple de dévissage sur l'écrou de liaison.

2. Procédé selon la revendication 1, dont l'outil de dévissage avant (300) comprend un élément tubulaire (320) pourvu de dents de forme complémentaire à celle des dents de l'écrou de liaison (20) que l'on met en place sur l'écrou de liaison et sur lequel on applique un couple de dévissage.

3. Procédé selon la revendication 2 selon lequel on dispose l'élément tubulaire dans un support (310) rapporté sur le carter du moteur, le dit support formant un appui pour l'application du couple de dévissage.

4. Procédé selon l'une des revendications 1 à 3, le module de turbine BP étant démonté, selon lequel on immobilise en rotation le rotor HP par un élément tubulaire (350) engagé dans l'espace dégagé par le module BP et fixé à une extrémité au carter du module HP et à l'autre extrémité rendu solidaire en rotation du rotor HP.

5. Procédé selon l'une des revendications 1 à 4 selon lequel, avant d'appliquer un couple de dévissage, on vérifie si l'écrou de liaison n'est pas grippé, au moyen d'une clé dynamométrique à cassure calibrée au couple maximal toléré.

## Patentansprüche

1. Verfahren zur Demontage eines Doppelkörper-Turbostrahltriebwerks, umfassend ein vorderes Gebläse (7), ein HD-Modul (40) mit einem HD-Rotor (353), ein ND-Turbinenmodul (60), wobei das dazwischen liegende Gehäuse ein Stützlager (P3) für den HD-Rotor aufweist, wobei der HD-Rotor von einer Überwurfmutter (20) in dem Lager gehalten wird, wobei das Verfahren einen Schritt des Einführens eines Lösewerkzeugs für die Überwurfmutter umfasst, nachdem der Zugang zu der Überwurfmutter freilegt wurde, **dadurch gekennzeichnet, dass** es einen Schritt des vorherigen Erhitzens der Überwurfmutter vor der Inbetriebnahme des Lösewerkzeugs (200, 300) umfasst, und dadurch, dass:
- nachdem das ND-Turbinenmodul (60) mit seiner Welle abgelegt wurde, wobei das Gebläse nicht demontiert ist, von hinten ein rohrförmiges Heizmittel (100) in den von dem ND-Turbinenmodul freilegten zentralen Raum entlang der Achse des Motors eingeführt wird, und die Überwurfmutter (20) von innen erhitzt wird,
- nach Erhitzen der Überwurfmutter ein hinteres Lösewerkzeug (200) eingeführt wird, wobei das Werkzeug ein Rohr und eine Vielzahl von Fingern umfasst, die zwischen einer Position, in der sie im Rohr untergebracht sind, und einer Position, in der sie radial ausgefahren sind, um mit den Zähnen der Überwurfmutter in Kontakt zu treten, einziehbar sind,
- ein Lösemoment auf das Werkzeug (200) angewendet wird, wobei das Moment auf einem Wert gehalten wird, der niedriger ist als jener eines tolerierten Maximalmoments, bei dem die Kräfte auf die Zähne diese beschädigen könnten,
- im Fall eines misslungenen Versuchs von hinten die Demontage des Gebläses vollzogen wird, so dass die Überwurfmutter (20) vorne freigelegt wird, und ein vorderes Lösewerkzeug (300) für die Anwendung eines Lösemoments auf die Überwurfmutter angeordnet wird.

2. Verfahren nach Anspruch 1, wobei das vordere Lösewerkzeug (300) ein rohrförmiges Element (320) umfasst, das mit Zähnen in einer Form versehen ist, die komplementär ist zu jener der Zähne der Überwurfmutter (20), das auf der Überwurfmutter angeordnet wird und auf das ein Lösemoment angewendet wird.

3. Verfahren nach Anspruch 2, wobei das rohrförmige Element in einer Halterung (310) bereitgestellt wird, die auf dem Gehäuse des Motors angebracht ist, wobei die Halterung eine Stütze für die Anwendung des Lösemoments bildet.

4. Verfahren nach einem der Ansprüche 1 bis 3, wobei, bei demontiertem ND-Turbinenmodul, der HD-Rotor von einem rohrförmigen Element (350) gegen Drehung gesichert wird, das in den von dem ND-Modul freilegten Raum eingesetzt und an einem Ende am Gehäuse des HD-Moduls fixiert ist und an dem anderen Ende mit dem HD-Rotor drehfest gemacht ist.

5. Verfahren nach einem der Ansprüche 1 bis 4, wobei vor dem Anwenden eines Lösemoments mittels eines Drehmomentschlüssels mit Langwegauslösung, der auf das tolerierte Maximalmoment eingestellt ist, geprüft wird, ob die Überwurfmutter nicht klemmt.

## Claims

1. Method for removing a twin-spool turbojet comprising a front fan (7), a HP module (40) with a HP rotor (353), a LP turbine module (60), the intermediate casing having a support bearing (P3) for the HP rotor, the HP rotor being retained in said bearing by a connector nut (20), the method comprising a step of inserting a tool for unscrewing the connector nut after having cleared the access to the connector nut, **characterised in that** it comprises a step of preheating the connector nut before starting the unscrewing tool (200, 300), and **in that**:
- after having removed the LP turbine module (60) with its shaft, with the fan still in place, a tubular heating means (100) is inserted through the rear into the central space cleared by the removal of the LP turbine module, along the axis of the engine, and the connector nut (20) is heated from the inside,
- after the heating of the connector nut, a rear unscrewing tool (200) is inserted, the tool comprising a tube and a plurality of fingers retractable between a position wherein they are housed in the tube and a position wherein they are radially deployed to come into contact with the teeth of the connector nut,
- an unscrewing torque is applied to the tool (200), with the torque being maintained at a value smaller than a tolerated maximum torque value, whereby the forces on the teeth would risk damaging them,
- in the event of an unsuccessful attempt via the rear, the fan is removed so as to release the connector nut (20) at the front and a front unscrewing tool (300) is set in place for the application of an unscrewing torque on the connector nut.

2. Method according to claim 1, wherein the front unscrewing tool (300) comprises a tubular element (320) provided with teeth of a shape that fits with that of the teeth of the connector nut (20), which is set in place on the connector nut and whereon an unscrewing torque is applied.

3. Method according to claim 2, wherein the tubular element is arranged in a support (310) added onto the casing of the engine, said support forming a support for the application of the unscrewing torque.

4. Method according to any one of the claims 1 to 3, the LP turbine module being removed, and wherein the HP rotor is rotationally immobilised by a tubular element (350) inserted in the space cleared by the removal of the LP module and at one end secured to the casing of the HP module and at the other end firmly secured rotationally to the HP rotor.

5. Method according to any one of the claims 1 to 4, wherein, before applying an unscrewing torque, the connector nut is inspected for jamming by means of a torque wrench calibrated to the tolerated maximum torque.
